# EUROPÄISCHE PATENTSCHRIFT

(11) **EP 2 871 450 B1**
(45) Veröffentlichungstag und Bekanntmachung des Hinweises auf die Patenterteilung: **23.03.2016**
(21) Anmeldenummer: 14185993.4
(22) Anmeldetag: 23.09.2014
(51) Int. Cl.: H01Q 1/22, G01F 23/284, G01S 13/88, H01Q 1/02, H01Q 19/06, G01S 7/02

(54) **Beheizte Antenne**
Heated antenna
Antenne chauffée

(30) Priorität: 08.11.2013 DE 102013222767
(43) Veröffentlichungstag der Anmeldung: 13.05.2015
(73) Patentinhaber: VEGA Grieshaber KG, 77709 Wolfach (DE)
(72) Erfinder: Benz, Joachim, 77756 Hausach (DE)
(74) Vertreter: Westphal, Mussgnug & Partner Patentanwälte mbB

(56) Entgegenhaltungen:
- WO-A1-2013/036108
- DE-B- 1 011 944
- US-A1- 2002 126 061
- US-A1- 2012 019 423
- US-B1- 6 175 335

## Beschreibung

Die vorliegende Erfindung betrifft ein Füllstandsmessgerät, insbesondere ein Radarwellenfüllstandsmessgerät zur Messung des Füllstands in einem Behälter, oder zur Messung der Schüttguthöhe in einem Behälter, gemäß dem Oberbegriff des Patentanspruchs 1.

Bekannt sind Sensoren zur Messung des Füllstands in einem Behälter, der mit einer Flüssigkeit oder mit einem Schüttgut aufgefüllt ist. Die Messung des Füllstands erfolgt dabei häufig mittels der Laufzeitbestimmung von Hochfrequenzsignalen, wobei der Sensor als Hornantenne oder als Parabolantenne ausgebildet ist.

Solche Radarwellenfüllstandsmessgeräte zur Messung des Füllstands in einem Behälter sind zum Beispiel aus US 2012/0019423 A1, aus US 2002/126061 A1 sowie aus WO 2013/036108 A1 bekannt. Bekannt sind auch aus US 6 175 335 B1 Antennen mit dielektrischen Linsen für ein Auto-Radar sowie aus DE 10 11 944 B wettergeschützte Mikrowellenantennen.

Solche Füllstandsmessgeräte können zur Messung des Füllstands von Flüssigkeiten oder zur Messung des Füllstands von Schüttgütern oder zur Bestimmung des Grenzstands von Flüssigkeiten oder Schüttgütern verwendet werden. Die Messung erfolgt dabei häufig in Behältern, die luftdicht gegenüber der Umgebungsatmosphäre abgedichtet sein müssen, weil sie unter hohem Druck stehen oder Atmosphären mit hohen Temperaturen aufweisen oder weil in den Behältern die Füllhöhe aggressiver Medien gemessen. werden muss. Denkbar sind auch zur Atmosphäre offene Behälter oder Bunker.

Bei der Messung von Füllständen mittels Laufzeitbestimmung von Hochfrequenzsignalen werden Hochfrequenzimpulse über eine Antenne ausgesendet und an einer Mediumsoberfläche reflektiert. Die reflektierten Hochfrequenzimpulse werden vom Sensor wieder empfangen. Aus dem Zeitunterschied zwischen dem Aussenden des Hochfrequenzimpulses und dem Empfangen des reflektierten Hochfrequenzimpulses kann der Abstand des Sensors zur Oberfläche des jeweiligen Mediums ermittelt werden. Die Hochfrequenzimpulse sind im Radarwellenbereich angesiedelt, die entsprechenden Füllstandsmessgeräte weisen daher normalerweise einen Mikrowellensender auf, welcher Mikrowellenstrahlung im C-Band, im K-Band oder im W-Band emittiert. Die Antennen in diesem Bereich sind in der Regel Hornantennen oder Hornantennen, die mit Parabolantennen gekoppelt sind. Der Mikrowellensender generiert die Mikrowellenstrahlung, welche dann durch einen Hohlleiter und eine am Ende des Hohlleiters angeordnete Hornantenne ausgesendet wird. Die Antenne ist in den Behälterinnenraum gerichtet, damit die Füllhöhe des im Behälter aufgenommenen Schüttguts oder der im Behälter aufgenommenen Flüssigkeit bestimmt werden kann.

Da die Antennenkomponenten vor Umwelteinflüssen, wie Staub oder Kondensation geschützt werden müssen, wird die Antenne von Füllstandsmessgeräten in der Regel mit einer Antennenabdeckung versehen. Die Antennenabdeckung soll dabei einerseits die Antennenkomponenten vor der Behälteratmosphäre schützen und andererseits die vom Mikrowellensender ausgesendeten Mikrowellen oder Radarsignale möglichst wenig beeinflussen.

Nachteilig bei solchen Antennenabdeckungen ist es jedoch, dass sich auf ihnen Staub und Kondensat niederschlagen kann, was in der Summe zu Verkrustungen führen kann, und dazu, dass das Nutzecho gedämpft wird und Störechos auftreten. Dies hat zur Folge, dass eine Bestimmung, oder zumindest eine hinreichend genaue Bestimmung des Abstands zwischen dem Füllstandsmessgerät und der zu messenden Schüttgut- oder Flüssigkeitsoberfläche nicht mehr möglich ist.

Aufgabe dieser Erfindung ist daher, ein Füllstandsmessgerät bereitzustellen, das auch in aggressiven Umgebungsatmosphären immer zuverlässig zur Messung des Füllstands eingesetzt werden kann.

Diese Aufgabe wird gelöst durch eine Vorrichtung nach Anspruch 1. Vorteilhafte Ausführungsformen sind in den Unteransprüchen offenbart.

Zur Lösung der Aufgabe sieht die Erfindung ein Füllstandsmessgerät vor, welches einen Mikrowellensender aufweist, eine mit dem Mikrowellensender verbundene Antenne, die eine Austrittsöffnung zum gerichteten Aussenden von Mikrowellenstrahlung aufweist, sowie eine an der Austrittsöffnung angeordnete, die Austrittsöffnung dichtend verschließende Antennenabdeckung. Erfindungsgemäß weist das Füllstandsmessgerät zusätzlich eine Heizvorrichtung auf, mit der die Antennenabdeckung heizbar ist. Auf diese Weise wird die Kondensatbildung auf der Antenne verhindert und die Verschmutzung bei Staubentwicklung dadurch reduziert, dass in der Summe mit dem Kondensat keine Verkrustungen mehr auftreten können. Dadurch werden sowohl Störechos als auch die Dämpfung des Nutzechos reduziert, was eine zuverlässige Messung der Füllstandshöhe auch bei aggressiven und kondensatbildenden Umgebungsatmosphären gewährleistet.

Die Heizvorrichtung ist vorteilhafterweise eine an der Antennenabdeckung angeordnete Widerstandsheizung. Sie weist vorzugsweise wenigstens eine zweiadrige Zuleitung zum elektrischen Verbinden der Widerstandsheizung mit einer Stromquelle auf, wobei die Widerstandsheizung an der Antennenabdeckung so angeordnet ist, dass sie die Antennenabdeckung direkt mittels Wärmeleitung heizt, wenn sie mit einer stromführenden Stromquelle verbunden ist. Eine Widerstandsheizung, die unmittelbar an der Antennenabdeckung angeordnet ist und diese unmittelbar heizen kann, ist mit vergleichsweise einfachen Mitteln aufzubauen.

Die Antennenabdeckung weist vorzugsweise eine außerhalb der Antenne konisch geformte Oberfläche auf, vorteilhafterweise eine Oberfläche, die flüssigkeitsabweisend ist. Der Vorteil einer derart geformten Antennenabdeckung ist, dass bei einer Flüssigkeitskondensatbildung das Kondensat nach unten ablaufen und abtropfen kann.

Die Antennenabdeckung kann beispielsweise eine Antennenlinse zum Bündeln der Mikrowellenstrahlung sein. Dadurch kann das Fokussieren und exakte Ausrichten der Mikrowellensignale mit einfachen mechanischen Mitteln gewährleistet werden.

Um zu gewährleisten, dass die in Messrichtung weisende Oberfläche der Antennenabdeckung gleichmäßig aufgeheizt wird, ist die Widerstandsheizung mäanderförmig an oder in der Antennenabdeckung verlaufend angeordnet.

Die Widerstandsheizung weist vorzugsweise parallel zueinander angeordnete Längsabschnitte auf, die an ihren Enden miteinander über Querabschnitte verbunden sind, wobei die Längsabschnitte geradlinig verlaufen und zumindest doppelt, vorzugsweise jedoch wenigstens viermal so lang sind wie die Querabschnitte. Die Widerstandsheizung kann dann relativ zur Antenne so ausgerichtet werden, dass die Längsabschnitte der Widerstandsheizung senkrecht zur Polarisation der Mikrowellenstrahlung angeordnet sind. Dadurch kann die Widerstandsheizung so ausgerichtet werden, dass sie die austretende Mikrowellenstrahlung möglichst wenig dämpft. Andererseits kann die Widerstandsheizung gleichzeitig als Polarisator für die Echosignale wirken, sodass beispielsweise an Behälterwänden reflektierte und in der Polarisationsrichtung geänderte parasitäre Mikrowellenstrahlung wenigstens teilweise unterdrückt werden.

Eine preisgünstige und gewichtsreduzierte Ausgestaltung der Antenne kann dadurch realisiert werden, dass die Antenne aus einem metallbeschichteten Kunststoff hergestellt wird.

Die Antennenabdeckung besteht vorzugsweise aus einem nichtleitenden Kunststoff, besonders vorzugsweise aus PTFE. Ein solcher Kunststoff hat den Vorteil, dass er das Mikrowellensignal nur sehr geringfügig dämpft.

Die Antennenabdeckung ist vorzugsweise mit einem Metallring am Ende der Antenne, vorzugsweise verschraubt, befestigt. Dieser Metallring kann vorteilhafterweise auch gleichzeitig als Teil eines Geräteflansches oder als Geräteflansch ausgebildet sein, der an den Behälter abdichtend anordenbar ist. Eine abdichtende, vorzugsweise druckfest abdichtende Verbindung ist insbesondere dann erforderlich, wenn die Atmosphäre in dem Behälterinnenraum von der Atmosphäre außerhalb des Behälterinnenraums sicher getrennt werden soll. Damit kann eine einfache und dichtende Befestigung der Antennenabdeckung an der Antenne realisiert werden. Ein solcher Metallring stabilisiert die Verbindung zwischen der Antennenabdeckung und der Antenne. Ist der Metallring Teil des Geräteflansches oder als Geräteflansch ausgebildet, so kann einerseits die Atmosphäre des Behälterinnenraums von der Atmosphäre des Behälteraußenraums separiert werden, andererseits kann die Antennenabdeckung dichtend an der Antenne befestigt werden, so dass auch ein Korrodieren der Antenne durch das im Behälter befindliche Material wirksam unterbunden wird.

Die vorzugsweise druckfeste, abdichtende Trennung zwischen Behälterinnenraum und Behälteraußenraum erhöht bei Schüttgut oder bei Flüssigkeiten, die nicht mit der Außenumgebung in Berührung kommen sollten, damit sie beispielsweise nicht kontaminiert werden, oder damit sie nicht die Umgebung kontaminieren, die Sicherheit. Bei unter Überdruck oder Unterdruck stehenden Behältern, insbesondere bei solchen, in denen sich umweltschädigende oder Gefahrgutmaterialien befinden ist eine besonders gute Abdichtung zwischen Behälterinnenraum und Behälteraußenraum zwingend erforderlich. Aber auch eine gute Abdichtung zwischen Behälterinnenraum und dem Inneren der Antenne ist hier zweckmäßig, um einerseits Korrosion an der Antenne zu vermeiden, andererseits ein definiertes, gleichbleibendes Dielektrikum im Inneren des Antennenstrahlers verfügbar zu haben. Ein Metallring an der Antennenabdeckung kann so, neben seiner stabilisierenden Wirkung auch diese Aufgaben erfüllen.

In einer vorteilhaften Ausführungsform weist das Füllstandsmessgerät einen Geräteflansch zum Abdichten eines Behälterinnenraums von einem Behälteraußenraum auf, wobei der Geräteflansch vorzugsweise einen Bohrkanal aufweist, dessen erstes Ende offen ist und dessen zweites Ende mit einer dichtend an dem Geräteflansch befestigten Abdichtungsverschraubung verschlossen ist, wobei die Abdichtungsverschraubung eine elektrische Durchführung aufweist. Dies ermöglicht eine druckfest abdichtende elektrische Durchführung der Heizdrahtzuleitung vom Behälteraußenraum in den Behälterinnenraum, sodass die Behälteratmosphäre nicht in die Umgebung gelangt. Die Zuleitung der Widerstandsheizung ist vorzugsweise in dem Bohrkanal angeordnet und mit der Abdichtungsverschraubung elektrisch verbunden oder durch die Abdichtungsverschraubung hindurchgeführt. Die Abdichtungsverschraubung kann dabei beispielsweise auch als Steckverbinder ausgebildet sein. Die Heizdrahtzuleitungen verlaufen außerhalb der Hohlleiterantenne, nicht in ihrem Inneren und können daher auch nicht ein durch den Hohlleiter wanderndes RF-Signal, beispielsweise die ausgesendete und/oder die empfangene Mikrowellenstrahlung beeinträchtigen.

In einer Ausführungsform kann die Zuleitung zusätzlich oder alternativ eine Abdichtungsdurchführung aufweisen, welche die Atmosphäre im Inneren der Antenne von der die Antenne umgebenden Atmosphäre trennt. Die Zuleitung zur Widerstandsheizung ist in diesem Fall durch die Abdichtungsdurchführung durchgeführt, wobei die Abdichtungsdurchführung vorzugsweise an dem Metallring angeordnet ist, damit eine mechanisch stabile Abdichtungsdurchführung realisiert wird, sodass das Füllstandsmessgerät robuster ist. Bei Messgeräten, die im Freien angebracht sind und im W-Band arbeiten, werden solche Durchführungen der elektrischen Zuleitungen meist nicht benötigt.

Das Füllstandsmessgerät kann weiterhin eine Steuereinheit zum Regeln der Heizvorrichtung aufweisen, die mit der Zuleitung zur Heizvorrichtung elektrisch verbunden ist. Durch die Steuerung der Heizvorrichtung wird ein Überheizen vermieden, wodurch mit insgesamt geringerer und optimierter Energie die Antennenabdeckung wirksamer geheizt werden kann.

So kann in einer vorteilhaften Ausführung der Erfindung die der Heizvorrichtung zugeführte Heizenergie beispielsweise zeitlich gesteuert zugeführt werden. Die Entscheidung darüber, ob und wie viel Leistung der Heizvorrichtung zugeführt werden soll, kann von weiteren Parametern abhängig gemacht werden. Die Leistung der der Heizvorrichtung zugeführten Energie kann beispielsweise in Abhängigkeit von der an der Antennenabdeckung gemessenen Temperatur und/oder in Abhängigkeit von der an der Antennenabdeckung gemessenen Feuchtigkeit und/oder in Abhängigkeit von an der Antennenabdeckung anhaftenden Bestandteilen und/oder in Abhängigkeit von anderen Parametern, wie beispielsweise dem Luftdruck oder der Beschaffenheit der das Füllstandsmessgerät umgebenden Atmosphäre bestimmt werden, und daraufhin der Heizvorrichtung zugeführt werden.

Zu diesem Zweck können Temperatursensoren, die an die Antennenabdeckung thermisch angekoppelt sind und an ihr vorteilhafterweise angeordnet und/oder befestigt sind, verwendet werden. Es können auch Feuchtigkeitssensoren, die an der Antennenabdeckung angeordnet sind, und vorzugsweise an der Antennenabdeckung angeordnet und befestigt sind, verwendet werden. Die jeweils an der Antennenabdeckung, vorzugsweise regelmäßig, gemessenen Temperatur und/oder Feuchtigkeitswerte können dann an die Steuereinheit übermittelt werden, welche beispielsweise darüber entscheidet, ob die Heizvorrichtung eingeschaltet wird oder nicht, oder darüber, welche Energiemenge pro Zeiteinheit der Heizung zugeführt werden soll.

In einer Ausführung kann eine potentielle Anhaftung an der Antennenabdeckung dadurch ermittelt werden, dass das ausgesendete und/oder rückreflektierte Mikrowellensignal des Füllstandmessgeräts genauer analysiert wird und abhängig vom Ergebnis dieser Analyse die Heizvorrichtung zugeschaltet wird, und vorteilhafterweise die der Heizvorrichtung zugeführte Heizenergie, oder der der Heizvorrichtung durchgeführte Strom bestimmt wird. Das Messgerät kann so eine Anhaftung erkennen und bei Erreichen eines Schwellwerts oder eines charakteristischen bzw. kritischen Mikrowellensignalverlaufs die Heizung zuschalten.

Das Füllstandmessgerät weist vorzugsweise ein Steuergerät auf, welches die der Heizvorrichtung zugeführte Energie zeitlich steuert, wobei zur Steuerung der der Heizvorrichtung zuzuführenden Energie die von den Temperaturmessmitteln und/oder Feuchtigkeitsmessmitteln und/oder die von dem ausgesendeten und/oder reflektierten Mikrowellensignal gelieferten und analysierten Messwerte verwendet werden. Sobald ein vorbestimmter Schwellwert und/oder ein charakteristischer Mikrowellensignalverlauf erreicht ist, kann der Heizvorrichtung die erforderliche Heizenergie zugeführt werden, um die Anhaftung wieder zu entfernen. Dies spart Energie, da nicht laufend, sondern nur bei Bedarf der Heizvorrichtung Heizenergie zugeführt werden muss. Nachdem die Anhaftung und/oder das auf der Antennenabdeckung kondensierte Material entfernt worden ist, kann die Heizvorrichtung wieder abgeschaltet werden.

Die Widerstandsheizung kann beispielsweise auf die Antennenabdeckung aufgeklebt sein. Dies stellt eine Möglichkeit dar, einen vollflächigen thermischen Kontakt zwischen der Widerstandsheizung und der Antennenabdeckung herzustellen. Die Heizenergie kann so effektiv durch Festkörperwärmeleitung auf die Antennenabdeckung übertragen werden und diese erwärmen. Vorzugsweise ist die Widerstandsheizung jedoch mit der Antennenabdeckung vergossen, wobei sie vorteilhafterweise als Widerstandsdraht ausgebildet ist. Die Widerstandsheizung kann andererseits aber auch als linienförmig verlaufendes, auf die Antennenabdeckung gesintertes Pulver oder als auf die Antennenabdeckung aufgedampfte Leiterbahn ausgebildet sein. Auch in diesen Fällen ist ein guter thermischer Kontakt zwischen der Widerstandsheizung und der Antennenabdeckung garantiert. Durch ein Aufkleben der Widerstandsheizung auf die Antennenabdeckung, vorzugsweise auf der zu der Schüttgutoberfläche oder von der Flüssigkeitsoberfläche abweisenden gerichteten Seite der Antennenabdeckung oder durch das Vergießen wird gewährleistet, dass ein möglichst guter Wärmeleitkontakt zwischen der Heizung und der Antennenabdeckung entsteht und die Heizwindungen nicht korrodieren können.

Das Heizprinzip kann flexibel sowohl bei einer Hornantenne als auch bei dem Radom einer Parabolantenne eingesetzt werden, sodass die Antenne vorzugsweise eine Hornantenne oder eine Parabolantenne ist.

Die in der nachfolgenden Beschreibung verwendeten Bezeichnungen wie oben, unten, links und rechts und Ähnliches beziehen sich auf Ausführungsbeispiele und sollen in keiner Weise einschränkend sein, auch dann nicht, wenn sie sich auf bevorzugte Ausführungsformen beziehen. Die Begriffe Mikrowellenstrahlung, Hochfrequenzstrahlung und Radarwellenstrahlung werden gleichbedeutend für eine elektromagnetische Strahlung im Bereich zwischen einem GHz und 1000 GHz verwendet.

Die Erfindung wird nachfolgend anhand von Zeichnungen näher beschrieben. Es zeigen:
- Figur 1: einen Querschnitt durch ein erstes Ausführungsbeispiel eines Füllstandsmessgeräts,
- Figur 2: einen Querschnitt für ein weiteres Ausführungsbeispiel eines Füllstandsmessgeräts,
- Figur 3: eine Anordnung einer Heizvorrichtung auf einer Antennenabdeckung.

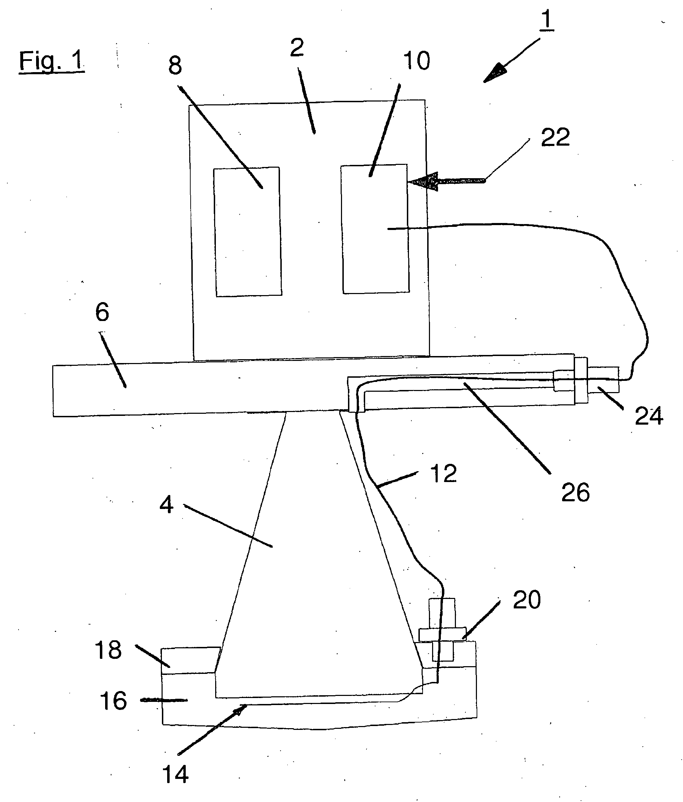

Figur 1 zeigt ein Füllstandsmessgerät 1, welches ein Sensorgehäuse 2 aufweist, das mit einer Hornantenne 4 verbunden ist. Zwischen dem Sensorgehäuse 2 und der Hornantenne 4 ist ein Geräteflansch 6 zum abdichtenden Aufsetzen des Füllstandsmessgeräts 1 auf einen Behälter nicht dargestellt angeordnet. Das Sensorgehäuse 2 beinhaltet eine Sensorelektronik 8 sowie eine Steuereinheit 10. Die Steuereinheit 10 versorgt über eine Heizanschlussleitung 12 eine Heizvorrichtung 14, die an einer Antennenabdeckung 16, welche mit einem Metallring 18 am unteren, oder strahlenaustrittsseitigen Teil der Hornantenne 4 befestigt ist, angeordnet ist.

Die Heizanschlussleitung 12 wird durch eine mit dem Metallring 18 verbundene Abdichtungsdurchführung 20 hindurchgeführt und mit der Heizvorrichtung 14 verbunden. Die Heizanschlussleitung 12 ist eine Zuleitung 12, die den von der Steuereinheit 10 zur Verfügung gestellten Steuerstrom der Widerstandsheizvorrichtung 14 zuführt. Die Steuereinheit 10 wird dabei mit einer Energiezuführung 22 von einer Batterie oder einer externen Stromquelle versorgt. Die Zuleitung 12 wird von der Steuereinheit 10 durch eine Abdichtungsverschraubung 24 und einem im Geräteflansch 6 angeordneten, als Bohrtunnel 26 ausgebildeten Bohrkanal in den Behälterinnenraum geführt. Die Abdichtungsverschraubung 24 ist druckdicht am Geräteflansch 6 befestigt. Der Geräteflansch 6 kann beispielsweise druckfest auf den Behälter (nicht dargestellt), der die Flüssigkeit oder das Schüttgut beinhaltet, aufgesetzt werden.

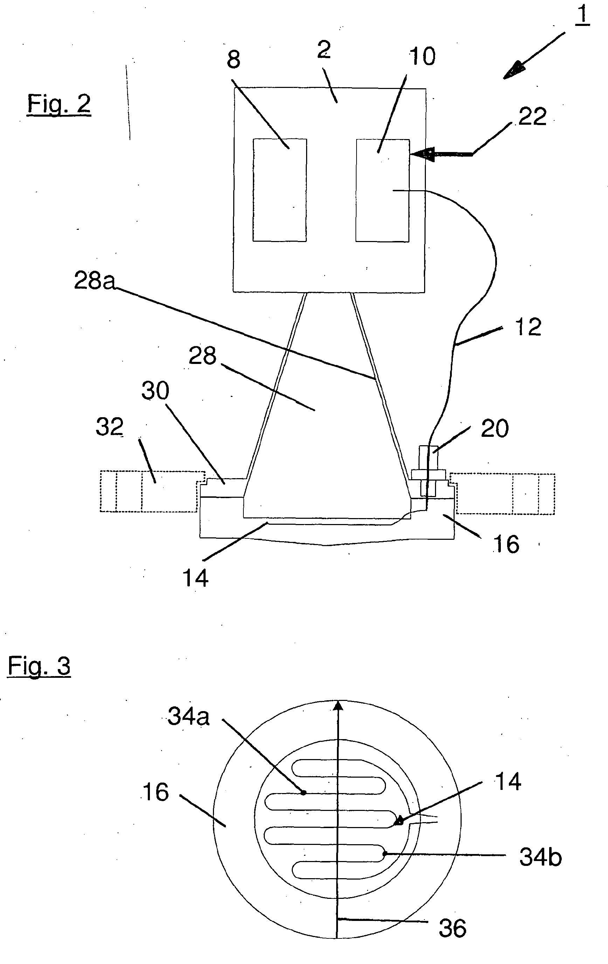

Figur 2 zeigt eine weitere Ausführung eines Füllstandsmessgeräts 1. Das die Steuereinheit 10 und die Sensorelektronik 8 beinhaltende Sensorgehäuse 2 ist direkt mit einer Kunststoffhornantenne 28 verbunden, welche vorzugsweise innen eine Metallbeschichtung 28a aufweist. Die Zuleitung 12 verbindet den Ausgang der Steuereinheit 10 mit dem Eingang der Heizvorrichtung 14, die als Widerstandsheizung in der Antennenabdeckung 16, die als Antennenlinse 16 ausgebildet ist, eingeschmolzen ist. Die Kunststoffhornantenne 28 weist eine Metallbeschichtung 28a auf, die mit einer Anformung 30, vorzugsweise aus Kunststoff oder Metall, verbunden sein kann. Die Zuleitung 12 wird durch eine an der Anformung 30 angeordnete Abdichtungsdurchführung 20 hindurchgeführt und unterhalb der Abdichtungsdurchführung 20 mit der Heizvorrichtung 14 verbunden. Die Abdichtungsdurchführung 20 kann beispielsweise, ebenso wie die Abdichtungsverschraubung 24 in Figur 1 und wie die Abdichtungsdurchführung 20 in Figur 1, eine Standard-PG-Verschraubung sein. Die Steuereinheit 10 dient der konstanten Erwärmung der Antennenabdeckung 16 auf eine Temperatur, welche zuverlässig die Kondensatbildung auf der Antennenabdeckung 16 beziehungsweise auf der Antennenlinse 16 verhindert. Die Antennenlinse 16 ist zusätzlich konisch geformt, sodass kondensierendes Material nach unten ablaufen und dort abtropfen kann. Die Anformung 30 weist einen Eingriff für das Eingreifen eines Überwurfflansches 32 auf, der mit dem Behälter (nicht dargestellt), welcher das Schüttgut oder die Flüssigkeit, dessen oder deren Oberfläche oder Volumen zu bestimmen ist, aufweist, druckdicht verbunden ist.

Figur 3 zeigt eine Heizvorrichtung 14, die in einer Antennenabdeckung, bzw. Antennenlinse 16 angeordnet ist. Die Widerstandsheizung 14 weist mehrere parallel zueinander angeordnete Längsabschnitte 34a auf, die über Querabschnitten 34b miteinander verbunden sind. Die Heizvorrichtung 14 ist in der Antennenabdeckung 16 beispielsweise eingeschmolzen, sodass ein guter Wärmeleitkontakt zwischen der Antennenabdeckung 16 und der Heizvorrichtung 14 besteht. Die Antennenabdeckung, bzw. Antennenlinse 16, ist so auf der metallbeschichteten Kunststoffhornantenne 28, 28a angeordnet, dass die Polarisationsrichtung 36 der vom Mikrowellengenerator (nicht dargestellt) emittierten Mikrowellenstrahlung senkrecht zu den Längsabschnitten 34a der Heizvorrichtung 14 angeordnet ist.

Die Erfindung wurde anhand zweier Ausführungsbeispiele erläutert, ohne auf diese beschränkt zu sein. Dem Fachmann sind zahlreiche Abwandlungen und Ausgestaltungen der erfindungsgemäßen Vorrichtung möglich, ohne dass dadurch der Erfindungsgedanke verlassen wird.

### Bezugszeichenliste

- 1: Füllstandsmessgerät
- 2: Sensorgehäuse
- 4: Hornantenne
- 6: Geräteflansch
- 8: Sensorelektronik
- 10: Steuereinheit
- 12: Zuleitung, Heizanschlussleitung
- 14: Heizvorrichtung
- 16: Antennenabdeckung, Antennenlinse
- 18: Metallring
- 20: Abdichtungsdurchführung
- 22: Energiezuführung
- 24: Abdichtungsverschraubung
- 26: Bohrkanal, Bohrtunnel
- 28: Kunststoffhornantenne
- 28a: Metallbeschichtung
- 30: Anformung
- 32: Überwurfflansch
- 34a: Längsabschnitt
- 34b: Querabschnitt
- 36: Mikrowellenpolarisationsrichtung

## Patentansprüche

1. Füllstandsmessgerät (1), aufweisend einen Mikrowellensender, eine mit dem Mikrowellensender verbundene Antenne (4, 28, 28a), die eine Austrittsöffnung zum gerichteten Aussenden von Mikrowellenstrahlung aufweist, sowie eine an der Austrittsöffnung angeordnete, die Austrittsöffnung dichtend verschließende Antennenabdeckung (16),
**dadurch gekennzeichnet, dass** das Füllstandsmessgerät (1) zusätzlich eine Heizvorrichtung (14) aufweist, mit der die Antennenabdeckung (16) heizbar ist.

2. Füllstandsmessgerät (1) nach Anspruch 1,
**dadurch gekennzeichnet, dass** die Heizvorrichtung eine an der Antennenabdeckung (16) angeordnete Widerstandsheizung (14) ist, die eine wenigstens zweiadrige Zuleitung (12) zum elektrischen Verbinden der Widerstandsheizung mit einer Stromquelle aufweist, wobei die Widerstandsheizung (14) an der Antennenabdeckung (16) so angeordnet ist, dass sie die Antennenabdeckung (16) direkt mittels Wärmeleitung heizt, wenn sie mit einer stromführenden Stromquelle verbunden ist.

3. Füllstandsmessgerät (1) nach Anspruch 1 oder 2,
**dadurch gekennzeichnet, dass** die Antennenabdeckung (16) eine außerhalb der Antenne konisch geformte Oberfläche aufweist, wobei die Oberfläche der Antennenabdeckung vorzugsweise flüssigkeitsabweisend ist.

4. Füllstandsmessgerät (1) nach einem der vorigen Ansprüche,
**dadurch gekennzeichnet, dass** die Antennenabdeckung eine Antennenlinse (16)zum Bündeln der Mikrowellenstrahlung ist.

5. Füllstandsmessgerät (1) nach einem der Ansprüche 2 bis 4,
**dadurch gekennzeichnet, dass** die Widerstandsheizung (14) mäanderförmig an oder in der Antennenabdeckung (16) verlaufend angeordnet ist.

6. Füllstandsmessgerät (1) nach einem der Ansprüche 2 bis 5,
**dadurch gekennzeichnet, dass** die Widerstandsheizung (14) parallel zueinander angeordnete Längsabschnitte (34a) aufweist, die an ihren Enden miteinander über Querabschnitte (34b) verbunden sind, wobei die Längsabschnitte (34a) geradlinig verlaufen und zumindest doppelt, vorzugsweise wenigstens viermal, so lang sind, wie die Querabschnitte (34b).

7. Füllstandsmessgerät (1) nach Anspruch 6,
**dadurch gekennzeichnet, dass** die Widerstandsheizung (14) relativ zur Antenne (4, 28, 28a) so ausgerichtet ist, dass die Längsabschnitte (34a) der Widerstandsheizung (14) senkrecht zur Polarisation (36) der Mikrowellenstrahlung angeordnet ist.

8. Füllstandsmessgerät (1) nach einem der vorigen Ansprüche,
**dadurch gekennzeichnet, dass** die Antenne (4, 28, 28a) aus einem metallbeschichteten Kunststoff besteht.

9. Füllstandsmessgerät nach einem der vorigen Ansprüche,
**dadurch gekennzeichnet, dass** die Antennenabdeckung (16) aus einem nichtleitenden Kunststoff, vorzugsweise aus PTFE, besteht.

10. Füllstandsmessgerät (1) nach einem der vorigen Ansprüche,
**dadurch gekennzeichnet, dass** die Antennenabdeckung (16) mit einem Metallring (18) am Ende der Antenne (4, 28, 28a), vorzugsweise verschraubt, befestigt ist.

11. Füllstandsmessgerät (1) nach einem der vorigen Ansprüche,
**dadurch gekennzeichnet, dass** das Füllstandsmessgerät (1) einen Geräteflansch (6) zum Abdichten eines Behälterinnenraums von einem Behälteraußenraum aufweist, wobei der Geräteflansch (6) einen Bohrkanal, vorzugsweise in Form eines Bohrtunnels (26) aufweist, dessen erstes Ende offen ist und dessen zweites Ende mit einer dichtend an dem Geräteflansch (6) befestigten Abdichtungsverschraubung (24) verschlossen ist, die eine elektrische Durchführung aufweist.

12. Füllstandsmessgerät (1) nach einem der Ansprüche 2 bis 11,
**dadurch gekennzeichnet, dass** die Zuleitung (12) durch eine Abdichtungsdurchführung (20), welche die Atmosphäre im Inneren der Antenne von der die Antenne umgebenden Atmosphäre trennt, durchgeführt ist, wobei die Abdichtungsdurchführung (20) vorzugsweise an dem Metallring (18) angeordnet ist.

13. Füllstandsmessgerät (1) nach einem der Ansprüche 2 bis 12,
**dadurch gekennzeichnet, dass** die Zuleitung (12) in dem Bohrkanal'(26)angeordnet und mit der Abdichtungsverschraubung (24) elektrisch verbunden oder durch die Abdichtungsverschraubung (24) hindurch geführt ist.

14. Füllstandsmessgerät (1) nach Anspruch 13,
**dadurch gekennzeichnet, dass** der Füllstandsmessgerät (1) eine Steuereinheit (10) zum Regeln der Heizvorrichtung aufweist, die mit der Zuleitung (12) elektrisch verbunden ist.

15. Füllstandsmessgerät (1) nach einem der Ansprüche 2 bis 14,
**dadurch gekennzeichnet, dass** die Widerstandsheizung (14) mit der Antennenabdeckung (16) vergossen ist, oder auf die Antennenabdeckung (16) aufgeklebt ist, wobei die Widerstandsheizung (14)vorzugsweise ein Widerstandsdraht ist.

16. Füllstandsmessgerät (1) nach einem der vorigen Ansprüche,
**dadurch gekennzeichnet, dass** die Antenne eine Hornantenne (4, 28, 28a) oder eine Parabolantenne ist.

17. Füllstandsmessgerät (1) nach einem der vorigen Ansprüche,
**dadurch gekennzeichnet, dass** der Metallring (18) Teil des Geräteflansches (6) ist, oder mit dem Geräteflansch (6) einstückig ausgebildet ist.

18. Füllstandsmessgerät (1) nach einem der vorigen Ansprüche,
**dadurch gekennzeichnet, dass** die Antennenabdeckung (16) ein Temperaturmessmittel und/oder ein Feuchtigkeitsmessmittel und/oder ein Mittel zum Erfassen von Anhaftungen auf der Antennenabdeckung (16) aufweist, und die Steuereinheit (10) zur Steuerung der der Heizvorrichtung (4) zuzuführenden Energie die von dem Temperaturmessmittel und/oder die von dem Feuchtigkeitsmessmittel, und/oder die von dem Mittel zum Erfassen von Anhaftungen gelieferten Messwerte verwendet.

19. Füllstandsmessgerät (1) nach einem der vorigen Ansprüche,
**dadurch gekennzeichnet, dass** die der Heizvorrichtung zugeführte Energie der Heizvorrichtung zeitlich gesteuert zugeführt wird.

20. Füllstandsmessgerät (1) nach einem der vorigen Ansprüche,
**dadurch gekennzeichnet, dass** die Leistung der der Heizvorrichtung zugeführten Energie in Abhängigkeit von der an der Antennenabdeckung gemessenen Temperatur und/oder in Abhängigkeit von der an der Antennenabdeckung gemessenen Feuchtigkeit und/oder in Abhängigkeit von an der Antennenabdeckung anhaftenden Bestahlteilen und/oder in Abhängigkeit von anderen Parametern bestimmt wird.

## Claims

1. Fill level measuring device (1), having a microwave transmitter, an antenna (4, 28, 28a) which is connected to the microwave transmitter and which has an outlet opening for the targeted emission of microwave radiation, as well as an antenna cover (16) which is arranged at the outlet opening, tightly sealing the outlet opening, **characterised in that** the fill level measuring device (1) additionally has a heating device (14) with which the antenna cover (16) can be heated.

2. Fill level measuring device (1) according to claim 1,
**characterised in that** the heating device is a resistance heater (14) which is arranged on the antenna cover (16), and which has an at least two-wire incoming power supply (12) for electrically connecting the resistance heater to a power source, with the resistance heater (14) being arranged on the antenna cover (16) such that it heats the antenna cover (16) directly by means of heat conduction when it is connected to a power source.

3. Fill level measuring device (1) according to claim 1 or 2,
**characterised in that** the antenna cover (16) has a surface that is conically shaped outside the antenna, with the surface of the antenna cover preferably being liquid-repellent.

4. Fill level measuring device (1) according to one of the previous claims,
**characterised in that** the antenna cover is an antenna lens (16) for bundling the microwave radiation.

5. Fill level measuring device (1) according to one of the claims 2 to 4,
**characterised in that** the resistance heater (14) is arranged to run in a meandering form on or in the antenna cover (16).

6. Fill level measuring device (1) according to one of the claims 2 to 5,
**characterised in that** the resistance heater (14) has longitudinal sections (34a) arranged parallel to one another, which at their ends are connected to one another via transverse sections (34b), wherein the longitudinal sections (34a) run in a straight line and are at least twice as long, preferably at least four times as long, as the transverse sections (34b).

7. Fill level measuring device (1) according to claim 6,
**characterised in that** the resistance heater (14) is aligned relative to the antenna (4, 28, 28a), such that the longitudinal sections (34a) of the resistance heater (14) are arranged perpendicular to the polarisation (36) of the microwave radiation.

8. Fill level measuring device (1) according to one of the previous claims,
**characterised in that** the antenna (4, 28, 28a) comprises a metal-coated plastic.

9. Fill level measuring device according to one of the previous claims,
**characterised in that** the antenna cover (16) comprises a non-conductive plastic, preferably PTFE.

10. Fill level measuring device (1) according to one of the previous claims,
**characterised in that** the antenna cover (16) is fastened with a metal ring (18) at the end of the antenna (4, 28, 28a), preferably via screw connection.

11. Fill level measuring device (1) according to one of the previous claims,
**characterised in that** the fill level measuring device (1) has a device flange (6) for sealing the interior of a container from the exterior, wherein the device flange (6) has a bore channel, preferably in the form of a bore tunnel (26), the first end of which is open and the second end of which is sealed by a sealing screw connection (24) which is fastened, in a sealing manner, on the device flange (6), and which has an electrical bushing.

12. Fill level measuring device (1) according to one of the claims 2 to 11,
**characterised in that** the incoming power supply (12) is led through a sealing bushing (20) which separates the atmosphere in the interior of the antenna from the atmosphere surrounding the antenna, wherein the sealing bushing (20) is preferably arranged on the metal ring (18).

13. Fill level measuring device (1) according to one of the claims 2 to 12,
**characterised in that** the incoming power supply (12) is arranged in the bore channel (26) and is electrically connected to the sealing screw connection (24) or is led through the sealing screw connection (24).

14. Fill level measuring device (1) according to claim 13,
**characterised in that** the fill level measuring device (1) has a control unit (10) for regulating the heating device, which is electrically connected to the incoming power supply (12).

15. Fill level measuring device (1) according to one of the claims 2 to 14,
**characterised in that** the resistance heater (14) is cast with the antenna cover (16), or is stuck to the antenna cover (16), with the resistance heater (14) preferably being a resistance wire.

16. Fill level measuring device (1) according to one of the previous claims,
**characterised in that** the antenna is a horn antenna (4, 28, 28a) or a parabolic antenna.

17. Fill level measuring device (1) according to one of the previous claims,
**characterised in that** the metal ring (18) is part of the device flange (6), or is formed in one piece with the device flange (6).

18. Fill level measuring device (1) according to one of the previous claims,
**characterised in that** the antenna cover (16) has a temperature-measuring means and/or a moisture-measuring means and/or a means for recording adhesions on the antenna cover (16), and the control unit (10) for controlling the energy to be supplied to the heating device (4) uses the measured values supplied by the temperature-measuring means and/or those from the moisture-measuring means, and/or those from the means for recording adhesions.

19. Fill level measuring device (1) according to one of the previous claims,
**characterised in that** the energy supplied to the heating device is supplied to the heating device in a time-controlled manner.

20. Fill level measuring device (1) according to one of the previous claims,
**characterised in that** the output of the energy supplied to the heating device is determined depending on the temperature measured at the antenna cover and/or depending on the moisture measured at the antenna cover and/or depending on components adhering to the antenna cover and/or depending on other parameters.

## Revendications

1. Appareil de mesure de niveau (1) comprenant un émetteur de microondes, une antenne (4, 28, 28a) reliée à l'émetteur de microondes qui comporte une ouverture de sortie permettant d'émettre de façon orientée un rayonnement microonde, ainsi qu'un recouvrement d'antenne (16) monté sur l'ouverture de sortie et fermant hermétiquement cette ouverture de sortie,
**caractérisé en ce que**
l'appareil de mesure de niveau (1) comprend en outre un dispositif de chauffage (14) avec lequel le recouvrement d'antenne (16) peut être chauffé.

2. Appareil de mesure de niveau (1) conforme à la revendication 1,
**caractérisé en ce que**
le dispositif de chauffage est constitué par un chauffage à résistance (14) monté sur le recouvrement d'antenne (16) qui comporte un conducteur d'alimentation à au moins deux fils (12) pour permettre la liaison électrique du chauffage à résistance avec une source de courant, le chauffage à résistance (14) est monté sur le recouvrement d'antenne (16) de sorte qu'il chauffe directement le recouvrement d'antenne (16) par conduction thermique lorsqu'il est relié avec une source de courant.

3. Appareil de mesure de niveau (1) conforme à la revendication 1 ou 2,
**caractérisé en ce que**
le recouvrement d'antenne (16) a une surface s'étendant coniquement à l'extérieur de l'antenne, la surface du recouvrement d'antenne évacuant de préférence les liquides.

4. Appareil de mesure de niveau (1) conforme à l'une des revendications précédentes,
**caractérisé en ce que**
le recouvrement d'antenne est une lentille d'antenne (16) permettant de focaliser le rayonnement microonde.

5. Appareil de mesure de niveau (1) conforme à l'une des revendications 2 à4,
**caractérisé en ce que**
le chauffage à résistance (14) est monté de façon à s'étendre en formant des méandres sur ou dans le recouvrement d'antenne (16).

6. Appareil de mesure de niveau (1) conforme à l'une des revendications 2 à 5,
**caractérisé en ce que**
le chauffage à résistance (14) comprend des segments longitudinaux (34a) disposés parallèlement les uns aux autres qui sont reliés au niveau de leurs extrémités par des segments transversaux (34b), les segments longitudinaux (34a) s'étendant linéairement et étant au moins deux fois et de préférence au moins quatre fois aussi longs que les segments transversaux (34b).

7. Appareil de mesure de niveau (1) conforme à la revendication 6,
**caractérisé en ce que**
le chauffage à résistance (14) est orienté relativement à l'antenne (4, 28) de sorte que les segments longitudinaux (34a) du chauffage à résistance (14) soient situés perpendiculairement à la direction de polarisation (36) du rayonnement microonde.

8. Appareil de mesure de niveau (1) conforme à l'une des revendications précédentes,
**caractérisé en ce que**
l'antenne (4, 28, 28a) est réalisée en un matériau synthétique ayant un revêtement métallique.

9. Appareil de mesure de niveau conforme à l'une des revendications précédentes,
**caractérisé en ce que**
le recouvrement d'antenne (16) est réalisé en un matériau synthétique non conducteur, de préférence en PTFE.

10. Appareil de mesure de niveau (1) conforme à l'une des revendications précédentes,
**caractérisé en ce que**
le recouvrement d'antenne (16) est fixé de préférence vissé sur une bague métallique (18) à l'extrémité de l'antenne (4, 28, 28a).

11. Appareil de mesure de niveau (1) conforme à l'une des revendications précédentes,
**caractérisé en ce que**
l'appareil de mesure de niveau (1) comprend une bride (6) pour permettre de réaliser l'étanchéité du volume interne d'un réceptacle par rapport au volume externe de ce réceptacle, cette bride (6) comprenant un canal de perçage de préférence réalisé sous la forme d'un tunnel de perçage (26) dont une première extrémité est ouverte tandis que la seconde extrémité est fermée par un vissage d'étanchéité (24) fixé de façon étanche à la bride (6), et qui comporte un passage électrique.

12. Appareil de mesure de niveau (1) conforme à l'une des revendications précédentes,
**caractérisé en ce que**
le conducteur d'alimentation (12) passe au travers d'un passage d'étanchéité (20) qui sépare l'atmosphère à la partie interne de l'antenne à l'atmosphère entourant l'antenne, le passage d'étanchéité (20) étant de préférence monté sur la bague métallique (18).

13. Appareil de mesure de niveau (1) conforme à l'une des revendications 2 à 12,
**caractérisé en ce que**
le conducteur d'alimentation (12) est situé dans le canal de perçage (26) et est relié électriquement au vissage d'étanchéité (24) ou passe au travers de ce vissage d'étanchéité (24).

14. Appareil de mesure d'état de remplissage (1) conforme à la revendication 13,
**caractérisé en ce que**
l'appareil de mesure d'état de remplissage (1) comporte une unité de commande (10) pour permettre de régler le dispositif de chauffage qui est relié électriquement au conducteur d'alimentation (12).

15. Appareil de mesure de niveau (1) conforme à l'une des revendications 2 à 14,
**caractérisé en ce que**
le chauffage à résistance (14) est soudé au recouvrement d'antenne (16) ou est collé sur ce recouvrement d'antenne (16), le chauffage à résistance (14) étant de préférence un fil résistant.

16. Appareil de mesure de niveau (1) conforme à l'une des revendications précédentes,
**caractérisé en ce que**
l'antenne est une antenne en cornet (4, 28, 28a) ou une antenne parabolique.

17. Appareil de mesure de niveau (1) conforme à l'une des revendications précédentes,
**caractérisé en ce que**
la bague métallique (18) est une partie de la bride (6) ou est réalisée en une seule pièce avec la bride (6).

18. Appareil de mesure de niveau (1) conforme à l'une des revendications précédentes,
**caractérisé en ce que**
le recouvrement d'antenne (16) comporte un moyen de mesure de la température et/ou un moyen de mesure de l'humidité et/ou un moyen permettant de détecter la présence d'adhérences sur le recouvrement d'antenne (16) et l'unité de commande (10) permettant de commander l'énergie devant être apportée au dispositif de chauffage (4) utilise les valeurs de mesure fournies par le moyen de mesure de la température et/ou par le moyen de mesure de l'humidité et/ou par le moyen permettant de détecter des adhérences.

19. Appareil de mesure de niveau (1) conforme à l'une des revendications précédentes,
**caractérisé en ce que**
l'énergie apportée au dispositif de chauffage est apportée au dispositif de chauffage de façon commandée dans le temps.

20. Appareil de mesure de niveau (1) conforme à l'une des revendications précédentes,
**caractérisé en ce que**
la puissance de l'énergie apportée au dispositif de chauffage est déterminée en fonction de la température mesurée au niveau du recouvrement d'antenne, et/ou en fonction de l'humidité mesurée au niveau du recouvrement d'antenne et/ou en fonction de particules de composants adhérant sur le recouvrement d'antenne et/ou en fonction d'autres paramètres.
